# DEMANDE DE BREVET EUROPEEN

(11) **EP 2 946 980 A1**
(43) Date de publication de la demande: **25.11.2015**
(21) Numéro de dépôt: 15168755.5
(22) Date de dépôt: 21.05.2015
(51) Int. Cl.: B60W 40/08, B60W 50/16

(54) **DISPOSITIF D'AIDE À LA CONDUITE COMPRENANT DES LUNETTES D'AIDE À LA CONDUITE**

(30) Priorité: 23.05.2014 FR 1454684
(71) Demandeur: VALEO VISION, 93012 Bobigny Cedex (FR)
(72) Inventeur: Elidrissi, Hafid, 93500 Pantin (FR); Beev, Kostadin, 77184 Emerainville (FR); Hue, David, 95430 Butry-sur-Oise (FR); Gratien, Steed, 78260 Hachères (FR)

(57) **Abrégé**

La présente invention concerne un dispositif (10) d'aide à la conduite d'un véhicule automobile adapté pour coopérer avec des moyens de détection (16a, 16b) de situation dangereuse. Le dispositif (10) d'aide est caractérisé en ce que le dispositif comprend des lunettes (12) d'aide à la conduite portées par le conducteur du véhicule, les lunettes (12) d'aide comprenant des moyens de réception (26) adaptés pour recevoir des données relatives à la détection d'une situation dangereuse, les données provenant des moyens de détection (16a, 16b) de situation dangereuse, et comprenant des moyens de vibrations (28) configurés pour vibrer à la réception desdites données par les moyens de réception (26), de façon à alerter le conducteur sur la détection de la situation dangereuse.

## Description

### Domaine technique de l'invention

L'invention concerne un dispositif d'aide à la conduite d'un véhicule automobile.

### Arrière-plan technologique

La présente invention concerne les procédés et les dispositifs destinés à apporter une aide à la conduite des véhicules automobiles, particulièrement lorsque le véhicule se trouve ou risque de se trouver dans une situation dangereuse.

Des situations considérées comme dangereuses lors de la conduite d'un véhicule automobile sont par exemple un endormissement du conducteur, un changement involontaire de voie (matérialisé par exemple par le franchissement de la ligne délimitant la voie), ou bien la détection d'un obstacle, tel qu'un piéton traversant la voie ou un objet tombé sur la voie. Il existe des solutions adaptées à la détection de ces situations dangereuses, et une des réponses apportées par le véhicule pour éviter le danger est notamment d'émettre une alerte à destination du conducteur.

Les solutions existantes pour alerter le conducteur peuvent être par exemple des alertes visuelles (voyant sur le tableau de bord, un écran, etc.), sonores ou sensorielles (vibrations dans le siège ou le volant du véhicule, etc.).

Ces solutions existantes possèdent néanmoins des inconvénients, notamment parce que les alertes peuvent gêner les autres occupants du véhicule (principalement les alertes sonores), parce que les alertes risquent de ne pas être perçues par le conducteur alors qu'elles lui sont destinées (voyants non visibles en cas d'endormissement, alerte sonore peu audible à grande vitesse ou si une radio est allumée, etc.), ou parce qu'elles demandent un dispositif encombrant et couteux en énergie pour alerter de façon efficace le conducteur (vibrations dans le siège ou le volant).

### Objectifs de l'invention

L'invention vise à pallier au moins certains des inconvénients des dispositifs d'aide à la conduite connus.

En particulier, l'invention vise aussi à fournir, dans au moins un mode de réalisation de l'invention, un dispositif d'aide à la conduite permettant d'alerter efficacement le conducteur en cas de détection d'une situation dangereuse.

L'invention vise aussi à fournir, dans au moins un mode de réalisation, un dispositif d'aide à la conduite permettant d'alerter le conducteur de la détection d'une situation dangereuse sans gêner les autres occupants du véhicule.

L'invention vise aussi à fournir, dans au moins un mode de réalisation de l'invention, un dispositif d'aide à la conduite permettant d'alerter le conducteur de la détection d'une situation dangereuse en réduisant les risques que le conducteur ne perçoive pas l'alerte.

L'invention vise aussi à fournir, dans au moins un mode de réalisation de l'invention, un dispositif d'aide à la conduite consommant moins d'énergie que les dispositifs d'aide de l'art antérieur.

L'invention vise aussi à fournir, dans au moins un mode de réalisation de l'invention, un dispositif d'aide à la conduite nécessitant des composants moins encombrants que les dispositifs d'aide de l'art antérieur.

### Exposé de l'invention

Pour ce faire, l'invention concerne un dispositif d'aide à la conduite d'un véhicule automobile adapté pour coopérer avec des moyens de détection de situation dangereuse, caractérisé en ce que le dispositif comprend des lunettes d'aide à la conduite portées par le conducteur du véhicule, les lunettes d'aide comprenant :
- des moyens de réception adaptés pour recevoir des données relatives à la détection d'une situation dangereuse, les données provenant des moyens de détection de situation dangereuse,
- des moyens de vibrations configurés pour vibrer à la réception desdites données, de façon à alerter le conducteur sur la détection de la situation dangereuse.

Un dispositif d'aide selon l'invention permet donc d'alerter le conducteur de la détection d'une situation dangereuse par le biais d'une vibration provenant de moyens de vibrations situé sur des lunettes portées par le conducteur. Cette vibration est donc mieux perçue par le conducteur qu'une alerte visuelle, ne dérange pas les autres utilisateurs contrairement à une alerte sonore, nécessite des composants de plus petites tailles et moins d'énergie qu'une alerte vibrante dans le siège conducteur ou le volant du véhicule pour une même perception de la vibration par le conducteur.

Avantageusement et selon l'invention, les moyens de vibration sont intégrés dans au moins une des branches des lunettes d'aide.

Selon cet aspect de l'invention, les moyens de vibration sont situés à proximité du crâne du conducteur, ce qui améliore la perception de l'utilisateur et réduit le risque de ne pas être alerté de la situation dangereuse.

Avantageusement et selon l'invention, les moyens de vibration sont intégrés dans chaque branche des lunettes d'aide.

Selon cet aspect de l'invention, les moyens de vibrations permettent notamment une spatialisation de l'alerte en fonction par exemple de la position de la situation dangereuse.

Avantageusement et selon l'invention, les moyens de vibration comportent au moins :
- un moteur vibrant, et/ou
- un élément piézoélectrique.

Avantageusement et selon l'invention, les moyens de réception sont adaptés pour recevoir lesdites données par le biais d'un protocole de communication sans-fil.

On entend par communication sans-fil toute communication ne nécessitant pas de support matériel, tel que par exemple une communication par ondes radio, lumière, infrarouge, etc.

Selon cet aspect de l'invention, les moyens de réception permettent de recevoir les données sans nécessité d'une connexion matérielle telle qu'un câble ou un fil de connexion, et ainsi de ne pas gêner le conducteur dans ses mouvements. En outre, le conducteur peut ainsi quitter le véhicule tout en continuant de porter les lunettes d'aide, afin de ne pas avoir à les retirer ou remettre à chaque entrée ou sortie du véhicule.

Avantageusement et selon l'invention, les moyens de détection sont également portés par les lunettes d'aide.

Selon cet aspect de l'invention, les moyens de détection peuvent informer sur des situations dangereuses relatives au conducteur, par exemple une situation d'endormissement détectée par un accéléromètre ou un gyroscope du fait que la tête du conducteur est anormalement penchée.

Avantageusement et selon l'invention, les moyens de détection de situation dangereuse sont adaptés pour détecter une ou plusieurs des situations dangereuses suivantes :
- franchissement d'une ligne délimitant une voie de circulation,
- endormissement ou baisse de vigilance du conducteur,
- obstacle sur la voie de circulation ou à proximité de celle-ci.

Avantageusement et selon l'invention, les lunettes d'aide sont des lunettes anti-éblouissement.

Selon cet aspect de l'invention, les lunettes ont des fonctions anti-éblouissement simples, telles des lunettes de soleil à verre opaque, ou bien plus complexes, telles des lunettes dotées d'obturateurs permettant la variation de la transmission de la lumière à travers les verres de celles-ci entre un niveau haut proche d'une transparence totale et un niveau bas proche d'une opacité totale en fonction de l'éblouissement détecté ou en synchronisme avec l'éclairage du véhicule.

L'invention concerne également un ensemble comprenant un émetteur adapté pour transmettre des données relatives à la détection d'une situation dangereuse provenant de moyens de détection d'une situation dangereuse, et un dispositif d'aide selon l'invention, l'émetteur transmettant les données aux moyens de réception du dispositif d'aide.

L'invention concerne également un système d'aide à la conduite d'un véhicule automobile, comprenant :
- des moyens de détections d'une situation dangereuse,
- un émetteur adapté pour transmettre des données relatives à la détection d'une situation dangereuse provenant des moyens de détection d'une situation dangereuse,
- un dispositif d'aide selon l'invention, l'émetteur transmettant les données aux moyens de réception du dispositif d'aide.

L'invention concerne également un dispositif d'aide, un ensemble et un système d'aide caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un dispositif d'aide à la conduite d'un véhicule automobile selon un mode de réalisation de l'invention,
- la figure 2 est une vue schématique de lunettes d'aide selon un mode de réalisation de l'invention.

### Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

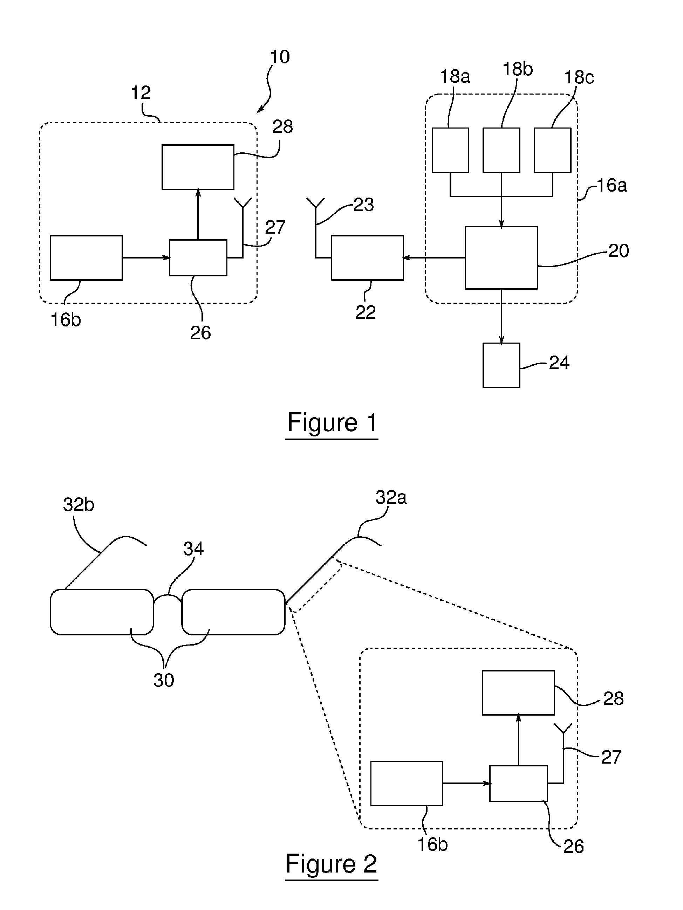

La figure 1 représente schématiquement un dispositif 10 d'aide à la conduite d'un véhicule automobile selon un mode de réalisation de l'invention. Le dispositif 10 d'aide est composé de lunettes 12 d'aide à la conduite, représentées ici schématiquement sous la forme d'un rectangle arrondi en pointillés et décrit plus en détail en référence à la figure 2.

Les lunettes 12 d'aide comprennent des moyens de réception 26, adaptés pour recevoir des données, ici des données relatives à la détection d'une situation dangereuse.

Ladite situation dangereuse est déterminée par des moyens de détection 16a de situation dangereuse. Dans ce mode de réalisation, les moyens de détection 16a de situation dangereuse sont composés d'une pluralité de modules 18a, 18b, 18c, par exemple un module 18a de détection de franchissement de ligne délimitant une voie de circulation, un module 18b de détection de l'endormissement ou de la baisse de vigilance du conducteur et un module 18c de détection d'obstacle sur la voie de circulation, dans le trajectoire du véhicule, l'obstacle pouvant être par exemple un piéton, un cycliste ou un objet tombé sur la voie. Les modules 18a, 18b, 18c transmettent leurs données respectives à un calculateur 20 des moyens de détection 16a permettant le transfert de ces données vers différents équipements du véhicule.

Les modules 18a, 18b, 18c se présentent sous plusieurs formes selon les technologies employées, on peut citer par exemple :
- une caméra, des capteurs infrarouges ou des capteurs lasers dirigés vers l'extérieur du véhicule, dans le sens de la trajectoire de celui-ci, permettant à la fois la détection du franchissement d'une ligne et la détection de la présence d'obstacles sur la voie de circulation,
- une caméra dirigée vers le conducteur à l'intérieur du véhicule, permettant la détection de l'endormissement ou de la baisse de vigilance du conducteur.

Selon les modes de réalisation, les modules 18a, 18b, 18c peuvent effectuer eux-mêmes la totalité ou une partie des calculs (traitement d'image, analyse des résultats) permettant de déterminer une situation dangereuse, ou bien le calculateur 20 effectue lui-même ces calculs, chaque module 18a, 18b, 18c envoyant les données brutes ou partiellement traitées.

Si les moyens de détection 16a détectent une situation dangereuse, les données relatives à cette situation dangereuse sont transmises à un émetteur 22 chargé de transmettre ces données au dispositif 10 d'aide. Selon la situation dangereuse détectée, les moyens de détection 16a peuvent aussi transmettre les données à d'autres équipements 24 du véhicule automobile, tel que des dispositifs de freinage automatique, correction de trajectoire, etc.

L'émetteur 22 transmet ensuite les données relatives à la détection de la situation dangereuse grâce à un protocole de communication sans-fil, par exemple le protocole IEEE 802.15.1, plus connu par sa dénomination commerciale Bluetooth, ou une évolution de ce dernier (Bluetooth v2, v3, v4, etc.). D'autres protocoles de communication sans-fil adaptés à la transmission de ces données peuvent être utilisés, notamment IEEE 802.11 (Wi-Fi), ou communication par infrarouge, par lumière visible, etc. Cette communication sans-fil se fait par exemple au moyen d'une antenne d'émission 23.

Ces données transmises sans-fil sont reçues par les moyens de réception 26 du dispositif 10 d'aide. Ces moyens de réception 26 comprennent un récepteur adapté au protocole de communication sans-fil utilisé par l'émetteur 22, par exemple une antenne de réception 27.

Dans ce mode de réalisation, les moyens de réception 26 sont aussi adaptés pour recevoir des données relatives à une situation dangereuse envoyées par un élément supplémentaire 16b, faisant partie des moyens de détection de situation dangereuse mais porté par les lunettes 12. Cet élément 16b situé sur les lunettes 12 est par exemple un accéléromètre ou un gyroscope permettant par exemple de détecter le fait que la tête du conducteur est anormalement penchée, cette inclinaison étant synonyme d'endormissement ou de perte d'attention. Du fait de la proximité de cet élément 16b avec les moyens de réception 26 car situés tout les deux sur les lunettes 12, ces deux éléments peuvent en outre communiquer par le biais d'un fil de connexion ou autre connexion matérielle (notamment circuit électronique).

Les moyens de réception 26 transmettent à des moyens de vibrations 28 :
- soit les données relatives à la détection de la situation dangereuse, que les moyens de vibrations 28 interprètent,
- soit une consigne de vibration interprétée par les moyens de réception 26 et appliquée par les moyens de vibrations 28.

Dans les deux cas, la réception de ces données entraine une vibration des moyens de vibrations 28 de façon à alerter le conducteur de la détection de la situation dangereuse.

La figure 2 représente les lunettes 12 d'aide à la conduite selon un mode de réalisation de l'invention. Les lunettes 12 d'aide peuvent être des lunettes spécifiquement dédiées à l'implémentation du mode de réalisation de l'invention, mais peuvent aussi être des lunettes ayant d'autres fonctions par exemple l'anti-éblouissement. La fonction d'anti-éblouissement peut être une simple teinture des verres 30 pour les rendre opaques, du type lunettes de soleil, ou bien être une fonction élaborée, par exemple des verres 30 , par exemple dotés d'obturateurs, dont la transmission de lumière dépend d'un paramètre particulier interne (synchronisme avec un éclairage du véhicule) ou externe (éblouissement provenant d'un véhicule croisé) au véhicule, relevé par exemple par des capteurs. Une telle fonction élaborée est par exemple décrite en détail dans la demande de brevet français FR2988493. Si cette fonction élaborée nécessite la présence de moyens de réception pour recevoir des données, ceux-ci pourront être communs avec les moyens de réception 26 du dispositif 10 d'aide. De même, les signaux utilisés pour transmettre les différents types de données pourront utiliser le même protocole de communication.

Dans ce mode de réalisation, les moyens de vibrations 28, les moyens de réception 26 et le cas échéant les moyens de détection 16b sont situés sur une branche 32a des lunettes 12, de façon à permettre un port plus facile de celles-ci. En outre, les moyens de vibrations 28 sont de préférence placés au contact de la tête du conducteur de façon à ce que la vibration soit mieux perçue. Les vibrations peuvent être différentes en fonction du type de situation dangereuse détectée.

Les moyens de vibrations 28 peuvent être réalisés par le biais d'un moteur vibrant ou d'élément(s) piézoélectrique(s) (par exemple bipeur piézoélectrique ou film piézoélectrique). Les éléments piézoélectriques sont notamment moins encombrants et peuvent être placés sur toute partie des lunettes lorsqu'ils prennent la forme d'un film piézoélectrique.

En outre, les moyens de vibrations 28 sont choisis de façon à émettre le moins de bruit possible pour ne pas déranger les autres passagers, de préférence aucun bruit. Dans un mode de réalisation où les moyens de vibrations 28 sont au contact de la tête du conducteur, notamment aux alentours de ses oreilles, les moyens de vibration 28 peuvent transmettre du son au conducteur par le biais d'une technologie de vibration osseuse, le son transmis étant ainsi audible par le conducteur et inaudible par les autres passagers du véhicule.

Selon d'autres modes de réalisations non représentés :
- les moyens de vibration 28 sont situés sur le support de nez 34 des lunettes,
- les moyens de vibration 28 sont situés sur chaque branche 32a, 32b des lunettes 12 pour pouvoir spatialiser l'alerte en fonction du type ou de la localisation de la situation dangereuse détectée.

## Revendications

1. Dispositif d'aide à la conduite d'un véhicule automobile adapté pour coopérer avec des moyens de détection (16a, 16b) de situation dangereuse, **caractérisé en ce que** le dispositif comprend des lunettes (12) d'aide à la conduite portées par le conducteur du véhicule, les lunettes (12) d'aide comprenant :
- des moyens de réception (26) adaptés pour recevoir des données relatives à la détection d'une situation dangereuse, les données provenant des moyens de détection (16a, 16b) de situation dangereuse,
- des moyens de vibrations (28) configurés pour vibrer à la réception desdites données par les moyens de réception (26), de façon à alerter le conducteur sur la détection de la situation dangereuse.

2. Dispositif d'aide selon la revendication précédente, **caractérisé en ce que** les moyens de vibration (26) sont intégrés dans au moins une des branches (32a, 32b) des lunettes (12) d'aide.

3. Dispositif d'aide selon la revendication 2, **caractérisé en ce que** les moyens de vibration (26) sont intégrés dans chaque branche (32a, 32b) des lunettes (12) d'aide.

4. Dispositif d'aide selon l'une des revendications précédentes, **caractérisé en ce que** les moyens de vibration (28) comportent au moins :
- un moteur vibrant, et/ou
- un élément piézoélectrique.

5. Dispositif d'aide selon l'une des revendications précédentes, **caractérisé en ce que** les moyens de réception (26) sont adaptés pour recevoir lesdites données par le biais d'un protocole de communication sans-fil.

6. Dispositif d'aide selon l'une des revendications précédentes, **caractérisé en ce que** les moyens de détection (16b) sont également portés par les lunettes (12) d'aide.

7. Dispositif d'aide selon l'une des revendications précédentes, **caractérisé en ce que** les moyens de détection (16a, 16b) de situation dangereuse sont adaptés pour détecter une ou plusieurs des situations dangereuses suivantes :
- franchissement d'une ligne délimitant une voie de circulation,
- endormissement ou baisse de vigilance du conducteur,
- obstacle sur la voie de circulation ou à proximité de celle-ci.

8. Dispositif d'aide selon l'une des revendications précédentes, **caractérisé en ce que** les lunettes (12) d'aide sont des lunettes anti-éblouissement.

9. Ensemble comprenant un émetteur (22) adapté pour transmettre des données relatives à la détection d'une situation dangereuse provenant de moyens de détection (16a, 16b) d'une situation dangereuse, et un dispositif (10) d'aide selon l'une des revendications précédentes, l'émetteur (22) transmettant les données aux moyens de réception (26) du dispositif (10) d'aide.

10. Système d'aide à la conduite d'un véhicule automobile, comprenant :
- des moyens de détections (16a, 16b) d'une situation dangereuse,
- un émetteur (22) adapté pour transmettre des données relatives à la détection d'une situation dangereuse provenant des moyens de détection (16a, 16b) d'une situation dangereuse,
- un dispositif (10) d'aide selon l'une des revendications 1 à 8, l'émetteur (22) transmettant les données aux moyens de réception (26) du dispositif (10) d'aide.
